# EUROPEAN PATENT APPLICATION

(11) **EP 1 953 079 A1**
(43) Date of publication of application: **06.08.2008**
(21) Application number: 07425050.7
(22) Date of filing: 31.01.2007
(51) Int. Cl.: B62M 23/02

(54) **Propulsion device for manually driving electric bicycles with assisted pedal stroke**

(71) Applicant: Tecnocarbur S.r.L., 39100 Bolzano (IT)
(72) Inventor: De Concini, Maurizio, 39100 Bolzano (IT)
(74) Representative: Rinaldi, Carlo

(57) **Abstract**

A propulsion device for manually driving electric bicycles with assisted pedal stroke characterised by an electronic unit (2) controlling the electric motor (M) of the bicycle; the unit (2) acting by means of control mechanisms which are different from the usual ones of the electric bicycle; in order to limit the propulsion speed within a pre-established value the control unit (2) uses a signal emitted by an apparatus duly measuring the rotation speed of the electric motor (M); in addition, the unit (2) supplying the necessary and sufficient energy for the motor working in order to overcome the effort for the advancing motion and/or the load on the bicycle without exceeding the pre-established speed value; the unit (2) emits a control signal in using the bicycle at low speed in order to reach a speed lower than the legal value.

## Description

### BACKGROUND OF THE INVENTION

The present invention relates to an electronic control unit allowing to act a plurality of functions of an electric motor of a bicycle with assisted pedal stroke. This unit is part of a propulsion device making the driver in a position to manually drive the bicycle walking at its side and pushing it. Many rules grant this use to keep the electric bicycle included in the category "electric bicycle with assisted pedal stroke" (EPAC) on condition that the bicycle does not do more than 5 km p.h.

A bicycle with assisted pedal stroke is fitted with a rechargeable battery housed in a proper box allowing its use after the removing from the box. So doing the battery can be often recharged by means of the electric energy coming from the domestic net. The rule provides the motor is activated by the pedal stroke and it stops when the pedal strokes ends. Such a bicycle must be validated to move on the road, but the payment of a circulation fee is not required. In Italy the Highway Code fixes the highest speed reached by said bicycle with pedal stroke at 25 km p.h. The motor is directly coupled to a wheel by means of a rubber friction roller making the rim rotate or it is connected to the chain or it is integrated in the hub of a wheel.

These helping means can be used more or less when necessary to overcome slopes or to increase the speed of the vehicle. The manufacturers state that such a bicycle can travel up to 30 - 40 km. One or more spare batteries are used for longer travels.

### STAND OF THE TECHNIQUE

The available prior art consists of several systems providing that the electric bicycles with assisted pedal stroke comply with the rules in force; said rules, keeping the highest power which can by supplied by the electric motor unchanged, state the motor stops when the driver ends the pedal stroke or when the speed of the vehicle is lower than a pre-established speed (usually 5 km p.h.).

The traditional systems cannot supply the pickup up high slopes when the driver is on saddle. In this case the driver must move the pedals until the electronic control unit identifies the driver's pedal stroke. After this identification the unit enables the electric motor to work; the identification takes place after a certain distance covered by means of muscular force only, therefore, if the vehicle is driven by hand up a high slope or it supports a heavy load, the driver's manoeuvring is difficult or impossible. For the known bicycles with assisted pedal stroke, the only one solution is to dismount from the bicycle and push it by hand over the slope. The manual driving of the bicycle up a high slope and with a heavy load without electric motor help is a hard action limiting the utility of the vehicle.

### AIMS AND FEATURES OF THE INVENTION

The aim of the invention is to remedy to the failure of the prior art. The invention, as claimed, solves the problem of creating a propulsion device for manually driving electric bicycles with assisted pedal stroke. Therefore, the invention allows the advancing motion of the bicycle pushed by the motor while the driver, at its side, just supports and drives it. It is important that, in the above condition, the motor pushes the bicycle at a speed lower than the highest legal speed of 5 km p.h.

The advantages reached by using the invention mainly consist of the fact that the device solves the problem to drive the bicycle up the flights of subterranean garages; the device allows to walk at side of the bicycle also up high slopes or with a heavy load. In addition, more simply, the device allows to walk with a pedestrian without pushing the bicycle and keeping the whole control. In the below described embodiments of the invention the ergonomics and safety in the use have been carefully chosen. The invention is characterised by the fact that it comprises an electronic unit controlling the motor by means of an additional inlet. An electric control pulse crosses the inlet of the unit for activating a mechanism capable of operating the motor independently on the usual activation due to the pedal stroke.

The electric motor working acted by the control unit is of on/off or proportional type in order to keep the speed transmitted to the motor in the law limits field.

The device limits the speed at 5 Km p.h by using a tachometric signal, coming from the control unit through another inlet, in order to keep the same features of the electric bicycles with assisted pedal stroke. The tachometric signal can be supplied by a plurality of sensors mounted on the bicycle; said plurality of sensors usually acts in function on the pedal stroke up to the limit speed expected for the bicycles with assisted pedal stroke. The quick stopping of the electric motor in case of a braking always and in any case occurs during the driving by hand in order to allow the fast stopping of the bicycle. Advantageously, the electronic control unit feeds, when the bicycle is driven by hand, the motor by a power optimizing the motor efficiency that usually is low at low speed. The optimized power is reached by means of a known technique for the different electric motors in use.

In order to avoid accidents during the manually driving of the bicycle, it is necessary that the control mechanisms, used to make the electric motor working as well as to stop the bicycle and the motor, are placed in a proper area of the frame of the bicycle in order to get a correct control of the vehicle. The control mechanisms stopping or the operating of one of the brakes provided on the handlebar immediately stops the motor and the bicycle.

In order to avoid that the motor works like if the vehicle were lead by hand also when the driver is on saddle and the control mechanism is blocked, said control mechanism acts for a limited period and at regular intervals. In the opposite case, the working of device according to the invention is interrupted, therefore the bicycle automatically works in the standard assisted pedal stroke way. The control mechanisms are advantageously placed in a position, which is unreachable or difficultly reachable, by the driver on the saddle.

This description concerns a plurality of structural configurations and devices for an electric bicycle with assisted pedal stroke allowing the motor to move the vehicle when the driver walks at its side and controls it. In this kind of use the bicycle can reach a speed not higher than the "at walking pace" one (for example 5 km p.h.) so that the bicycle is safety driven by walking at its side. Further structural configurations of the electronic control unit are also described by means of which a speed not higher than 5 km p.h. Is reached. In addition, devices are disclosed which properly allow the bicycle to go ahead by means of the motor pushing only when the driver walks at its side and he properly acts the control mechanisms.

### ADVANTAGES OF THE INVENTION

The device according to the present invention is characterised by the fact that it comprises an electronic unit controlling the electric motor of the bicycle; the motor is controlled by control mechanisms, which are different from the usual mechanisms of a known electric bicycle. In order to limit the propulsion speed within a pre-established value, the control unit uses a signal emitted by an apparatus duly measuring the rotation speed of the electric motor; in addition, the unit supplies the necessary and sufficient energy for the motor working in order to overcome the effort for the advancing motion and/or the load on the bicycle without exceeding the pre-established speed value.

The device is also characterised by the fact that the electronic control unit emits a control signal, during the use at low speed of the bicycle, in order to reach a speed (for example 3 km p.h.) that is lower than the legal value (5 km p.h.).

An acoustic wheel emits a tachometric signal controlling if the speed of the bicycle driven by hand is the same or lower than the legal speed.

The control unit emits an operating signal, during the use of the bicycle at low speed, in order to modulate the speed within the pre-established value.

The tachometric signal controlling the speed limit is directly emitted by the sensors, which are disposed inside the electric motor of the bicycle.

The control unit keeps the brakes on the handlebar in function also when said brakes quickly stop the motor.

The control unit is housed in a pushing lever under the saddle; the lever allows to ergonomically drive the bicycle; one hand acts on the lever and the other one acts on the brake of the handlebar.

Otherwise, an on/off type device housed in the lever fixed under the saddle emits the control signal.

A proportional type device housed in the lever fixed under the saddle emits the control signal.

The lever, when it is used, protrudes on the side of the bicycle from the supporting frame of the saddle where the lever is fixed and when the lever is not used it is withdrawn along the frame of the saddle in order to avoid the interference of said lever during the usual functioning of the bicycle.

The lever housing the control unit is utilized to facilitate the positioning of the bicycle on the parking support.

### BRIEF DESCRIPTION OF THE DRAWINGS

Other advantages, features and aims of the invention, may be more readily understood by referring to the accompanying drawings, which concern a preferred embodiment, in which:
Fig. 1 represents a functional scheme showing the complex of the control mechanism necessary for manually driven an electric bicycle;
Fig. 2 shows a bicycle in a first working condition;
Fig. 3 shows the saddle of the bicycle of Fig. 2;
Fig. 4 represents the bicycle in a second working condition; and,
Fig. 5 shows the saddle of the bicycle of Fig. 4.

### DESCRIPTION OF A PREFERRED EMBODIMENT OF THE INVENTION

The figures represent a functional scheme of the complex of the control mechanisms, a control unit, the motor of the bicycle and a possible arrangement of the device on the frame in order to drive by hand the vehicle.

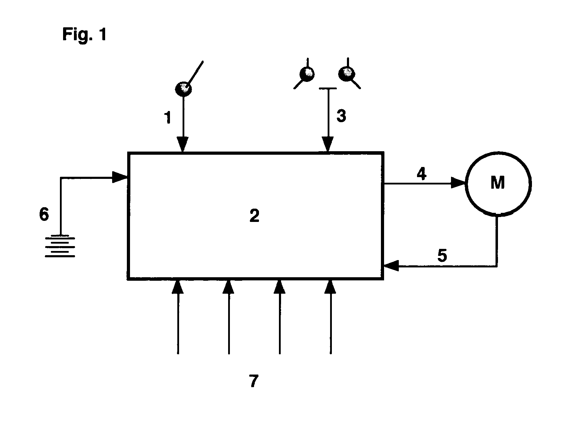

In the scheme of Fig. 1 an operating control mechanism 1 is connected to the inlet of an electronic control unit 2. A connection 4, found at the outlet of the unit 2, feeds and controls an electric motor M; the control unit 2 receives a tachometric signal 5 from the motor M. An inlet 3 of the stopping signal emitted by the brakes is also provided. A battery 6 feeds the whole system when the bicycle is driven by hand as well as when it is used with assisted pedal stroke.

A plurality of signals 7 is provided to make working the bicycle with assisted pedal stroke.

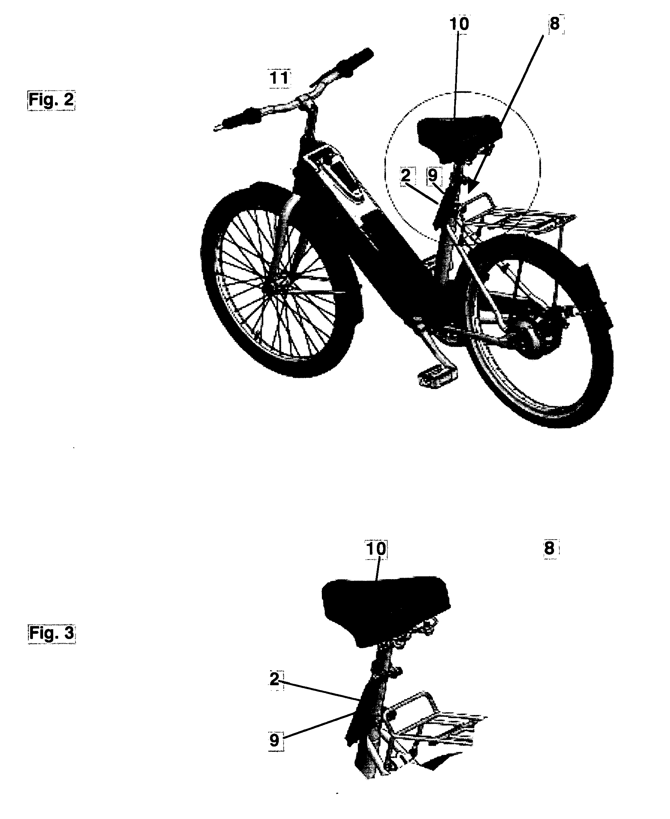

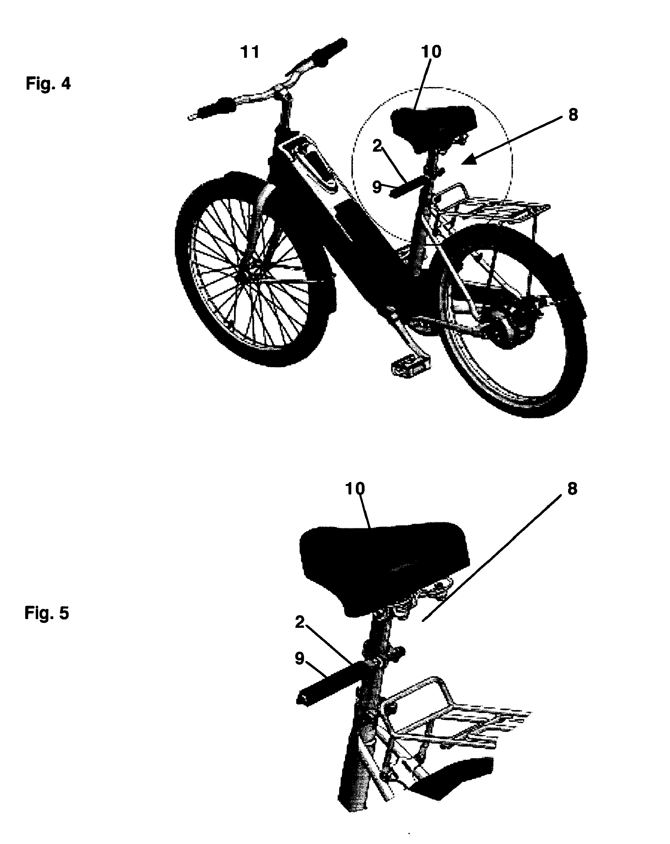

Referring to the other figures the operating control mechanism 1 used for driving the bicycle by hand is placed on the frame of the bicycle. The mechanism 1 essentially comprises a lever 9, which, as shown in figures 2, 3, is found in a first lowered position in order to make the driving of the bicycle more comfortable when the driver is on saddle. In figures 4, 5 the lever 9 of the mechanism 1 is carried up in order to easily drive the vehicle by one hand, while the other one acts on the handlebar.

In a not represented embodiment, the control signal for driving by hand the vehicle is emitted by a mechanism that, when the vehicle is manually driven, processes a signal proportional to the difference between the real instantaneous speed and the pre-established one.

In another not represented embodiment, the control signal for driving by hand the vehicle is emitted by a mechanism that, when the vehicle is manually driven, processes an on/off signal referring to the pre-established speed for this kind of working.

The mass of the vehicle acts as an inertial reciprocating wheel to avoid operations in jerks both when the mechanism is of on/off type and when it is of proportional type.

The proportional or on/off operating control mechanism is placed on the frame of the bicycle in any position ergonomically correct and capable of preventing the activation of the operating control mechanism when the driver is on saddle.

## Claims

1. A propulsion device for manually driving electric bicycles with assisted pedal stroke, **characterised by** an electronic unit (2) controlling the electric motor (M) of the bicycle; the unit (2) acting by means of control mechanisms which are different from the usual ones of the electric bicycle; in order to limit the propulsion speed within a pre-established value the control unit (2) uses a signal emitted by an apparatus duly measuring the rotation speed of the electric motor (M); in addition, the unit (2) supplying the necessary and sufficient energy for the motor working in order to overcome the effort for the advancing motion and/or the load on the bicycle without exceeding the pre-established speed value.

2. Device as in claim 1, wherein the unit (2) emits a control signal in using the bicycle at low speed in order to reach a speed lower than the legal value.

3. Device as in claim 2, wherein the control unit (2) emits a control signal in using the bicycle at low speed in order to modulate the speed within the pre-established value.

4. Device as in claim 1, wherein an acoustic wheel emits a tachometric signal controlling the speed of the vehicle.

5. Device as in claim 4, wherein sensors are provided capable of emitting a tachometric signal, said sensors being located inside the motor of the bicycle.

6. Device as in claim 1, wherein the control unit (2) keeps in function the brakes provided on the handlebar also when said brakes immediately stop the motor (M).

7. Device as in claims 1 and 2, wherein the unit (2) controlling the working at low speed is periodically and frequently in function in order to confirm the voluntary and controlled action of the vehicle.

8. Device as in claims 1, 2, 3, 5 and 6, wherein the control unit (2) is installed under the saddle (10) of the bicycle in order to ergonomically drive the bicycle when it is used at low speed; one hand acts on a lever (9) of the operating control mechanism (1) located under the saddle (10) and the other one acts on the brake of the handlebar (11).

9. Device as in claim 2, wherein the control signal allowing the manual pushing of the vehicle is generated by a mechanism that, when the vehicle is manually driven, processes a signal proportional to the difference between the real instantaneous speed and the pre-established one.

10. Device as in claim 2, wherein the control signal for driving by hand the vehicle is emitted by a mechanism that, when the vehicle is driven by hand, processes an on/off signal referring to the pre-established speed for this kind of working.

11. Device as in claims 8 and 9, wherein the lever (9), when it is used, protrudes on the side of the bicycle from the supporting frame of the saddle (10) where the lever is fixed and when the lever (9) is not used it is withdrawn along the frame of the saddle (10) in order to avoid the interference of said lever (9) during the usual functioning of the bicycle.

12. Device as in claims 8 and 9, wherein the lever (9) housing the control unit (2) is utilized to facilitate the positioning of the bicycle on the parking support.

13. Device as in previous claims, wherein the control unit (2) is in an ergonomically proper position of the frame of the bicycle preventing the activation of the control unit (2) when the driver is on saddle.
